# FASCICULE DE BREVET EUROPEEN

(11) **EP 2 451 727 B1**
(45) Date de publication et mention de la délivrance du brevet: **01.03.2017**
(21) Numéro de dépôt: 10751987.8
(22) Date de dépôt: 09.07.2010
(51) Int. Cl.: B65G 1/04, B65G 1/08, B65G 65/00

(54) **DISPOSITIF STATIQUE DE STOCKAGE PROVISOIRE DE PIECES DE CARROSSERIE DE VEHICULES AUTOMOBILES**
STATISCHE VORRICHTUNG ZUR TEMPORÄREN LAGERUNG VON MOTORFAHRZEUG-KAROSSERIETEILEN
STATIC TEMPORARY STORAGE DEVICE FOR MOTOR VEHICLE BODY PARTS

(30) Priorité: 10.07.2009 FR 0954844
(43) Date de publication de la demande: 16.05.2012
(73) Titulaire: Compagnie Plastic Omnium, 69007 Lyon (FR)
(72) Inventeur: GARDELLE, Yves, F-38400 Saint-Martin d'Hères (FR); MARCELLIER, Pierre, F-69001 Lyon (FR); OTTEMER, Xavier, F-38790 Saint Georges d' Esperanche (FR)
(74) Mandataire: Descazeaux, Charles
(86) Numéro de dépôt international: PCT/FR2010/051453
(87) Numéro de publication internationale: WO 2011/004131

(56) Documents cités:
- WO-A1-2010/012943
- US-A1- 2007 029 164

## Description

La présente invention concerne un ensemble de pièces de carrosserie de véhicules automobiles et d'un dispositif statique de stockage provisoire de pièces de carrosserie selon le préambule de la revendication 1.

Dans la présente description, on entend par pièce de carrosserie une pièce en matière plastique ou en métal appartenant à l'enveloppe extérieure visible d'un véhicule automobile. Une pièce de carrosserie peut être d'un seul tenant ou formée d'un assemblage de plusieurs morceaux de pièces et peut être nue ou équipée de composants.

En particulier, on entend par peau de pare-chocs une pièce de carrosserie formant un bouclier avant ou arrière de véhicule automobile, formée d'un unique morceau de matière plastique ou de métal ou d'un assemblage de tels morceaux, quel que soit le stade de fabrication de cette pièce, c'est-à-dire que la pièce de carrosserie soit partiellement ou complètement finie.

Du document FR2895375A1, on connaît un dispositif de rangement de peaux de pare-chocs grâce auquel on peut transporter des peaux de pare-chocs tout en les protégeant efficacement contre des rayures ou des marquages.

Le document US2007/029164A1 décrit un ensemble de pièces de carrosserie de véhicules automobiles et d'un dispositif statique de stockage provisoire desdites pièces de carrosserie selon le préambule de la revendication 1.

A cet effet, les peaux de pare-chocs sont emballées dans des housses, lesquelles sont suspendues individuellement à un portant muni de rails horizontaux, chaque portant pouvant glisser sur les rails pour permettre le chargement et le déchargement des peaux de pare-chocs sur le dispositif de rangement. Le dispositif de rangement est destiné à être chargé sur un véhicule de transport, pour acheminer les peaux de pare-chocs selon une chaîne logistique conventionnelle. Dans cet état de la technique, les housses permettent non seulement de protéger les peaux de pare-chocs, mais aussi de densifier le chargement en peaux de pare-chocs de chaque dispositif de rangement.

La présente invention concerne un ensemble de pièces de carrosserie de véhicules automobiles et d'un dispositif statique de stockage provisoire de pièces de carrosserie de véhicules automobiles. Un tel dispositif est utile sur les lieux de fabrication des pièces, pour terminer un procédé de traitement intermédiaire ou final, par exemple pour laisser refroidir les pièces ou pour laisser durcir un revêtement, et/ou pour les entreposer en attendant leur envoi vers un lieu de montage sur véhicule.

Les dispositifs statiques de stockage provisoire de peaux de pare-chocs sont notamment :
- des étagères fixes, les peaux de pare-chocs étant placées dans la position qu'elles auront sur le véhicule dans des conditions spécialement aménagées ou
- des toiles suspendues à des portants fixes ou
- des barres horizontales fixes sur lesquelles les peaux de pare-chocs sont posées crosses vers le bas.

Dans ces dispositifs connus, les peaux de pare-chocs sont rangées de façon à les protéger le mieux possible, mais avec une densité de stockage non optimale. En outre, leur manutention en vue de leur transport vers un lieu d'assemblage est une opération relativement lourde, pouvant nécessiter l'emploi de chariots élévateurs (car à fourche « fenwick »).

La présente invention vise à proposer un dispositif statique de stockage provisoire dont le chargement et le déchargement sont facilités et dont la densité de chargement peut être accrue sans risque d'endommagement des peaux de pare-chocs.

A cet effet, l'invention a pour objet un ensemble de pièces de carrosserie de véhicules automobiles et d'un dispositif statique de stockage provisoire de pièces de carrosserie selon la revendication 1.

Le dispositif peut également comporter des housses de protection contenant chacune une pièce de carrosserie.

Les moyens de suspension peuvent, par exemple, être constitués par des sangles formant des boucles passant sous les pièces de carrosserie ou par les housses seules.

Dans le contexte du stockage provisoire, le fait de suspendre les pièces de carrosserie à des chariots permet, d'une part, de densifier le chargement, ce qui procure un avantage économique car l'espace de stockage occupé sur le lieu de fabrication des pièces de carrosserie est moindre et, d'autre part, d'éviter certaines manipulations, qui seraient, sinon, nécessaires pour gérer un stock provisoire encombrant.

Dans un mode de réalisation particulier de l'invention, le dispositif comprend au moins un séparateur apte à se placer entre deux pièces de carrosserie portées par deux chariots voisins, pour éviter qu'elles s'abiment si elles se rapprochent l'une de l'autre.

L'avantage des séparateurs est qu'on peut serrer les pièces de carrosserie les unes contre les autres sans les abîmer lorsque les chariots qui les supportent sont juxtaposés. La fonction des séparateurs peut être remplie soit par entretoisement, soit par protection, mais dans les deux cas, les séparateurs doivent favoriser un rapprochement serré des pièces de carrosserie, pour densifier le chargement du dispositif de stockage provisoire selon l'invention.

Un séparateur selon l'invention peut être constitué par des sur-épaisseurs formées sur des sangles de suspension, sur-épaisseurs qui viennent s'appuyer les unes contre les autres en formant une entretoise entre deux pièces de carrosserie. Ainsi, les sangles remplissent à la fois le rôle de moyen de suspension et de séparateur.

Un autre séparateur conforme à l'invention pourrait être constitué par un rideau en matériau souple et amortissant, comme une toile épaisse, qui serait suspendu à un chariot, devant ou derrière la pièce de carrosserie qu'il supporte, pour la protéger si on la rapproche d'une pièce de carrosserie voisine.

Un autre séparateur selon l'invention pourrait être constitué par une housse, qui remplirait à la fois le rôle de moyen de suspension et de séparateur.

Une housse pourrait également être utilisée en conjonction avec des sangles de suspension.

Le fait de recourir à des housses suspendues procure l'avantage que les pièces de carrosserie sont protégées pendant leur stockage provisoire sans nécessiter de re-conditionnement à la suite de leur transport, car elles peuvent avoir été transportées préalablement dans les mêmes housses. Elles peuvent par exemple être transférées en camion d'un premier site par un ensemble de racks mobiles vers un deuxième site disposant du dispositif statique de stockage provisoire selon l'invention. De façon avantageuse, on pourra à cet effet utiliser des racks mobiles agencés pour pouvoir accueillir les mêmes chariots que ceux du dispositif statique de stockage de l'invention, ou au moins les mêmes housses.

Une telle housse pourrait recouvrir, notamment entièrement, la pièce de carrosserie sur une seule de ses faces. Ainsi, la pièce de carrosserie étant généralement galbée, la housse, recouvrant de préférence la face concave de la pièce et laissant de préférence libre la face convexe, permet l'emboîtement l'une dans l'autre des pièces de carrosserie. En outre, la face convexe de la pièce de carrosserie, qui est généralement sa face visible, est protégée des chocs pouvant survenir lors de la manutention des pièces. Ce mode de réalisation diminue également l'encombrement des pièces accolées car une seule épaisseur de housse est présente entre deux pièces de carrosserie.

Une housse pourrait également comporter un bord élastique lui permettant d'épouser la forme de la pièce de carrosserie. Cette housse est très simple à mettre en place sur la pièce de carrosserie.

La housse pourrait également comprendre, à sa partie inférieure, des attaches permettant de fixer une autre housse identique. On peut donc suspendre plusieurs housses l'une au-dessus de l'autre à un même chariot et ainsi former une « grappe » de housses.

De ce fait, s'il est besoin de transférer les chariots d'un rack mobile vers un dispositif statique de stockage, les opérations de transbordement sont réduites ce qui permet un gain de temps non négligeable.

Dans un mode de réalisation particulier de l'invention, les rails comportent chacun une face supérieure lisse et les appuis adaptés aux rails comportent chacun au moins un patin ou une roue capable de se déplacer sur la face supérieure lisse d'un rail.

Dans un mode de réalisation particulier de l'invention, le guidage des appuis le long des rails est assuré par des lèvres disposées en bordure de la face supérieure de chaque rail. Chaque lèvre fait saillie en direction de l'appui et forme une butée qui l'empêche de quitter le rail pendant son déplacement longitudinal, au moins dans une direction perpendiculaire au rail.

Deux dispositions différentes des lèvres sont envisageables :
- « à l'intérieur des rails » lorsqu'elles se trouvent sur un bord de chaque rail le plus proche de l'autre rail,
- « à l'extérieur des rails » lorsqu'elles se trouvent sur un bord de chaque rail le plus éloigné de l'autre rail.

En outre, les butées peuvent être verticales ou inclinées. Elles sont de préférence rigides. Verticales, elles retiennent les appuis sur le rail. Inclinées, elles autorisent chaque appui à déborder du rail en montant légèrement sur la butée dans l'hypothèse où le chariot se décalerait ou se désaxerait par rapport aux rails (léger pivotement par rapport à un axe vertical, également désigné « mise en crabe »). Ce risque de pivotement est d'autant plus important que les proportions dimensionnelles du chariot, recherchées pour la densification du chargement, ne sont pas favorables à son maintien dans l'axe des rails, c'est-à-dire que le rapport entre son empattement (d'environ 2m) et sa largeur (d'environ 15 à 40 cm) facilitent plutôt sa mise en crabe. Dans l'hypothèse où les butées sont inclinées, le fait que l'appui monte sur la butée engendre une force de recentrage de l'appui qui peut permettre, si les angles sont déterminés de manière appropriée en tenant compte des masses et des dimensions des différents éléments en cause, de replacer le chariot dans l'axe des rails. Avec des butées verticales, le risque est au contraire qu'en cas de décalage ou de pivotement du chariot, ce dernier se bloque entre les butées.

Afin de mieux faire comprendre l'invention, on va maintenant en décrire des modes de réalisation donnés à titre d'exemples non limitatifs de la portée de l'invention, en référence aux dessins annexés dans lesquels :
- la figure 1 est un schéma en élévation d'un dispositif de stockage provisoire selon un mode de réalisation,
- la figure 2 est une vue en perspective d'un chariot, monté sur des rails et portant une peau de pare-chocs, selon un premier mode de réalisation,
- la figure 3 est une vue en coupe, selon le plan III-III de la figure 2, d'un chariot selon un deuxième mode de réalisation,
- la figure 4 est une vue analogue à la figure 3, les rails étant réalisés selon un deuxième mode de réalisation,
- la figure 5 est une vue analogue aux figures 3 et 4, les rails étant réalisés selon un troisième mode de réalisation,
- la figure 6 est une vue en élévation d'un chariot portant deux peaux de pare-chocs superposées, selon un cinquième mode de réalisation.
- la figure 7 est un schéma en élévation d'un rack mobile portant plusieurs peaux de pare-chocs (représentées ici sans séparateur), utilisable en combinaison avec le dispositif de stockage provisoire de la figure 5.

Dans toutes les dessins, des personnages ont été schématisés pour fournir une référence dimensionnelle.

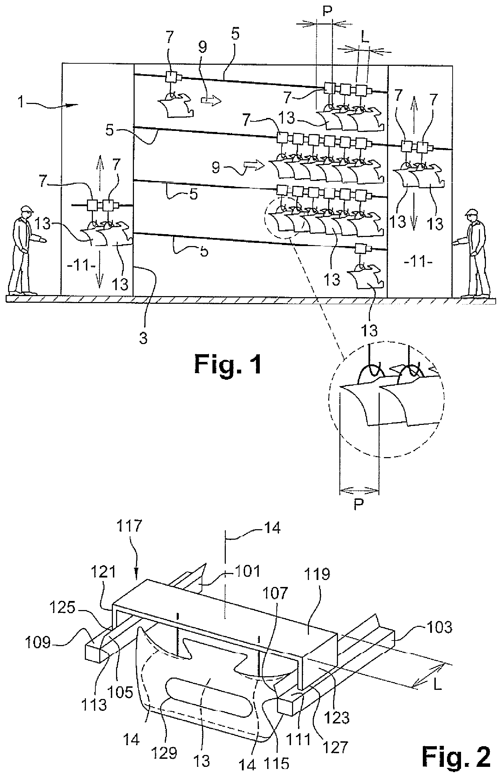

Sur la figure 1, le dispositif de stockage provisoire 1 est constitué d'un bâti 3 sur lequel sont montés quatre paires de rails 5 formant quatre étages de stockage. Chaque paire de rails 5 est légèrement inclinée de sorte que des chariots 7, coulissants sur les rails, ont naturellement tendance à se déplacer dans les directions indiquées par les flèches 9.

De part et d'autre du bâti 3, des ascenseurs 11 peuvent se déplacer verticalement pour charger ou décharger des chariots 7 sur les paires de rails 5.

Chaque chariot 7 supporte une ou plusieurs peau de pare-chocs 13, comme cela va être détaillé sur les figures suivantes.

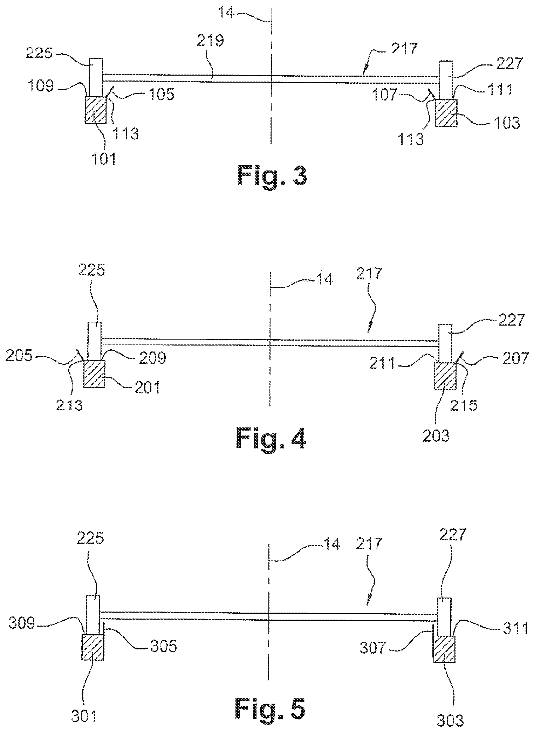

Sur la figure 2, deux rails 101 et 103 d'une paire 5 s'étendent parallèlement l'un à l'autre (seulement un tronçon de chaque rail est représenté) en étant séparés d'une distance de 2m. Ces rails sont fixes sur le bâti 3. Chaque rail 101, 103 est constitué par un profilé métallique à section carrée et comporte une lèvre 105, 107 en saillie de sa face supérieure plane et lisse 109, 111, sur un bord de celle-ci. Les lèvres 105, 107 sont disposées sur les bords intérieurs des rails, c'est-à-dire qu'ils prennent naissance sur une arête 113, 115 d'un rail la plus proche de l'autre rail. Cette disposition des lèvres 105, 107 est dite « à l'intérieur ». Comme on te voit mieux à la figure 3, les lèvres 105, 107 sont inclinées vers l'intérieur (c'est-à-dire l'une vers l'autre), en formant avec l'horizontale un angle, par exemple de 45 degrés.

Ainsi, chaque lèvre 105, 107 forme une butée inclinée à côté de la face supérieure lisse 109, 111 de chaque rail, laquelle forme un chemin de roulement ou de glissement pour les appuis d'un chariot.

Sur la figure 2, le chariot 117 est glissant. Il comporte un plateau 119 et deux jambages 121, 123, dont chacun possède un patin 125, 127 constituant un appui reposant sur la face supérieure lisse et plane 109, 111 d'un rail 101, 103. L'interface entre chaque patin 125, 127 et le chemin de roulement 109, 111 correspondant est adaptée pour limiter les frottements entre ces deux surfaces.

Le chariot est dimensionné pour ne reposer sur les rails que par ses patins 125, 127, de sorte qu'il peut facilement glisser dans la direction longitudinale.

Grâce aux lèvres inclinées 105, 107, les patins 125, 127 ne quittent pas facilement leur chemin de glissement.

Ainsi, le guidage des appuis 125, 127 le long des rails 101. 103 est assuré par les lèvres 105, 107 disposées en bordure de la face supérieure lisse 109, 111 de chaque rail, chaque lèvre faisant saillie en direction de l'appui et formant une butée qui empêche ledit appui de quitter le rail pendant son déplacement longitudinal, au moins dans une direction perpendiculaire au rail.

Le chariot 117 présente un encombrement longitudinal L de 20 cm. La longueur des patins ne doit donc pas dépasser de cet encombrement maximum de longueur L. Par rapport à l'écartement de 2m entre les rails, la longueur des patins est relativement réduite, ce qui tendrait à faciliter un léger pivotement du chariot 117 autour d'un axe vertical 14 (« mise en crabe » du chariot 117) sur les rails 101, 103. Toutefois, grâce aux lèvres inclinées 105, 107, le chariot demeure dans l'axe des rails et glisse sans blocage sur ceux-ci.

Le chariot 117 comporte des moyens de suspension sous la forme d'une housse 129 qui enferme et protège une peau de pare-chocs 13, ainsi suspendue au plateau 119 du chariot 117 dans la position qu'elle occupera sur le véhicule (également désignée « position véhicule »). La housse 129 joue également le rôle de séparateur.

Comme cela est connu, chaque peau de pare-choc 13 possède des crosses 14 qui lui confèrent, en vue de dessus en position véhicule, une forme générale en C. Cette forme est propice à un encastrement des peaux de pare-chocs deux-à-deux. Grâce à l'encombrement longitudinal L réduit de chaque chariot 117, qui est inférieur à l'encombrement longitudinal d'une peau de pare-chocs en position véhicule, deux peaux de pare-chocs 13 voisines peuvent s'encastrer l'une dans l'autre en étant séparées par les deux épaisseurs de leurs housses 129. En d'autres termes, le pas P d'encastrement minimum, c'est-à-dire l'encastrement maximum (voir détail de la figure 1), des peaux de pare-chocs est atteint avant que, et éventuellement sans que, deux chariots successifs sur les rails soient en contact à leurs extrémités longitudinales : le pas P est donc plus grand que la dimension longitudinale d'un chariot. De cette manière, comme on le voit sur la figure 1, la densité de chargement du dispositif de stockage provisoire est optimale, car elle ne dépend que de la forme des peaux de pare-chocs et des séparateurs utilisés et n'est pas imposée par les chariots.

Sur la figure 3, on a représenté un chariot roulant 217, qui possède des roues 225, 227 aux extrémités de son plateau 219. Le chariot 217 est dimensionné pour ne reposer sur les rails que par ses roues 225, 227 qui constituent des appuis roulant sur la face supérieure lisse 109, 110 de chaque rail, laquelle constitue alors une surface de roulement.

Comme pour le chariot 117 de la figure 2, les butées inclinées sont constituées par des lèvres 105, 107 qui empêchent les roues 225, 227 de quitter leur surface de roulement 109, 111 et redressent le chariot 217 si ce dernier tend à se mettre « en crabe ».

Cette disposition « à l'intérieur des lèvres inclinées 105, 107 procure les meilleurs résultats quant au redressement du chariot.

Ainsi, le guidage des appuis 225, 227 le long des rails 101, 103 est assuré par les lèvres 105, 107 disposées en bordure de la face supérieure lisse 109, 111 de chaque rail, chaque lèvre faisant saillie en direction de l'appui et formant une butée qui empêche ledit appui de quitter le rail pendant son déplacement longitudinal, au moins dans une direction perpendiculaire au rail.

Dans le mode de réalisation de la figure 4, le même chariot 217 se déplace sur des rails 201, 203 possédant des lèvres inclinées 205, 207 sur ses bords extérieurs, c'est-à-dire prenant naissance sur l'arête supérieure 213, 215 de chaque rail la plus éloignée de l'autre rail. Chaque lèvre 205, 207 est inclinée vers l'extérieur, c'est-à-dire qu'elle s'élève en s'éloignant de l'autre rail. Comme précédemment, les lèvres 205, 207 ont pour fonction de retenir les roues 225, 227 sur leurs surfaces de roulement 209, 211.

Ainsi, le guidage des appuis 225, 227 le long des rails 201, 203 est assuré par les lèvres 205, 207 disposées en bordure de la face supérieure lisse 209, 211 de chaque rail, chaque lèvre faisant saillie en direction de l'appui et formant une butée qui empêche ledit appui de quitter le rail pendant son déplacement longitudinal, au moins dans une direction perpendiculaire au rail.

Le mode de réalisation de la figure 5 est une variante de celui de la figure 3, dans laquelle les lèvres 305, 307 des rails 301, 303 sont verticales au lieu d'être inclinées. Les lèvres 305, 307 forment alors des butées verticales qui retiennent les roues 225, 227 sur leurs surfaces de roulement 309, 311, sans possibilité de monter sur les lèvres en cas de « mise en crabe » du chariot 217.

Ainsi, le guidage des appuis 225, 227 le long des rails 301, 303 est assuré par les lèvres 305, 307 disposées en bordure de la face supérieure lisse 309, 311 de chaque rail, chaque lèvre faisant saillie en direction de l'appui et formant une butée qui empêche ledit appui de quitter le rail pendant son déplacement longitudinal, au moins dans une direction perpendiculaire au rail.

Le choix entre les modes de réalisation des figures 3 et 5, c'est-à-dire entre butées inclinées et butées verticales, dépend des jeux laissés entre les roues 225, 227 et les rails 101, 103 et 301, 303. Bloquer les roues 225, 227 sur leurs surfaces de roulement 309, 311, comme sur la figure 5, peut fournir de meilleurs résultats que de les autoriser à monter sur des butées inclinées si les jeux sont très réduits. En revanche, avec des jeux importants, de légers pivotements du chariot sont inévitables et il peut être préférable de le redresser en douceur par l'action des butées inclinées qui le recentrent sur les surfaces de roulement 109, 111 des rails 101, 103 sans le bloquer.

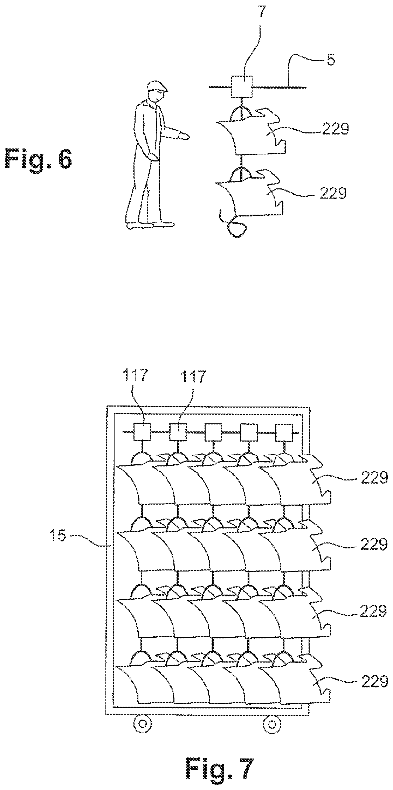

Sur la figure 6, on a représenté, sur une portion de paire de rails 5, un chariot 7 muni de moyens de suspension sous forme de housses 229. Chaque housse 229 permet de suspendre une peau de pare-chocs et possède, à sa partie inférieure, des attaches permettant de fixer une autre housse identique. Ainsi, sur la figure 6, deux housses sont suspendues l'une au-dessus de l'autre à un même chariot du type de ceux précédemment décrits.

Sur la figure 7, on a représenté un rack mobile 15 destiné au transport des peaux de pare-chocs dans des véhicules de transport, notamment des camions. Un tel rack mobile 15 peut être utilisé en combinaison avec le dispositif stationnaire de stockage provisoire 1 grâce à sa capacité à accueillir des chariots 117 ou 217 et des housses 129, 229 identiques à ceux précédemment décrits. Dans l'exemple représenté, quatre étages de housses 229 sont formés sur le rack 15. Ainsi, le conditionnement des peaux de pare-chocs est le même pour leur stockage provisoire et pour leur transport, et le chargement / déchargement des chariots sur / du dispositif de stockage est facilité, ce qui réduit les manipulations tout en augmentant la densité de chargement pour le transport.

Il est bien entendu que les modes de réalisation décrits ci-dessus ne présentent aucun caractère limitatif de la portée de l'invention et qu'ils pourraient recevoir toute modification désirable sans sortir de la portée des revendications.

Dans un mode de réalisation adapté à des peaux de pare-chocs, la dimension longitudinale (par rapport aux rails) des chariots est ainsi de préférence inférieure à 25 cm.

Dans un mode de réalisation avantageux de l'invention, les rails sont légèrement inclinés de manière que la masse de chaque chariot ou, dans une variante, la masse cumulée de chaque chariot, d'au moins une pièce de carrosserie et des moyens de suspension, suffise pour le faire se déplacer sur les rails sous l'effet de son propre poids ou, dans la variante, sous l'effet du poids cumulé de ces trois éléments. Ainsi, les chariots se rassemblent naturellement au point le plus bas des rails, sans aucune consommation d'énergie. Le mouvement des chariots le long des rails pouvant provoquer des à-coups, voire des chocs entre chariots, le fait de suspendre les pièces de carrosserie aux chariots constitue un avantage de la combinaison de moyens constituant l'invention. En particulier, les pièces de carrosserie voisines portées par des chariots voisins peuvent suivre des mouvements d'ensemble et ainsi éviter de se heurter les unes avec les autres ou chacune avec les parois de son propre contenant.

Dans un autre mode de réalisation, des roues juxtaposées les unes à côté des autres avec leurs axes horizontaux et perpendiculaires à la direction longitudinale du rail constituent la face supérieure de ce rail et les appuis du chariot adaptés aux rails sont de simples pieds à face inférieure lisse longitudinalement, qui roulent sur les roues du rail. Dans ces deux modes de réalisation, les roues peuvent être remplacées par des billes ou des galets ou des aiguilles.

Dans un autre mode de réalisation, chaque rail présente une face supérieure lisse longitudinalement et chaque appui du chariot est un patin qui glisse sur cette face supérieure du rail. Dans ce cas, un matériau anti-friction, par exemple de type polymère fluoré, peut revêtir la face supérieure du rail ou la face inférieure du patin.

Dans le mode de réalisation dans lequel les butées sont placées à l'intérieur des rails, les inventeurs ont toutefois remarqué que, de manière inexpliquée, les cas de blocage du chariot sont considérablement réduits si les butées sont verticales et les cas de pivotement du chariot sont également considérablement réduits si les butées sont inclinées.

## Revendications

1. Ensemble de pièces de carrosserie (13) de véhicules automobiles et d'un dispositif statique (1) de stockage provisoire desdites pièces de carrosserie (13), l'ensemble comprenant :
- un bâti fixe (3),
- au moins deux rails fixes parallèles (101, 103 ; 201, 203 ; 301, 303), montés horizontaux ou légèrement inclinés sur le bâti (3), chaque rail étant capable de supporter un appui (125, 127 ; 225, 227) adapté au rail de façon à être mobile longitudinalement sur ce rail,
- au moins un chariot (7 ; 117, 217) muni d'appuis (125, 127 ; 225, 227) adaptés au rail, dimensionné pour reposer par ces appuis sur les deux rails,
- des moyens (129 ; 229) de suspension au chariot d'une pièce de carrosserie (13),
chaque chariot (7 ; 117 ; 217) s'étendant, longitudinalement par rapport aux rails, sur une longueur (L) inférieure à l'encombrement longitudinal d'une pièce de carrosserie, dans sa position de suspension, l'ensemble étant **caractérisé en ce que** les moyens de suspension (129 ; 229) sont conformés de sorte que l'encombrement de deux pièces de carrosserie (13) accolées est inférieur à deux fois l'encombrement d'une pièce de carrosserie.

2. Ensemble selon la revendication 1, dans lequel chaque chariot (7 ; 117 ; 217) s'étend, longitudinalement par rapport aux rails, sur une longueur (L) inférieure au pas (P) d'emboîtement des pièces de carrosserie (13) dans leur position de suspension, si lesdites pièces de carrosserie peuvent s'emboîter deux à deux dans leur position de suspension.

3. Ensemble selon l'une des revendications précédentes, comportant des housses (129 ; 229) de protection contenant chacune une pièce de carrosserie (13).

4. Ensemble selon la revendication précédente, dans lequel au moins une housse (129 ; 229) recouvre la pièce de carrosserie sur une seule de ses faces.

5. Ensemble selon l'une des revendications 3 et 4, dans lequel au moins une housse (129 ; 229) comporte un bord élastique.

6. Ensemble selon l'une des revendications 3 à 5, dans lequel au moins une housse (129 ; 229) comprend, à sa partie inférieure, des attaches permettant de fixer une autre housse identique.

7. Ensemble selon l'une des revendications précédentes, dans lequel les moyens de suspension sont constitués par des housses (129 ; 229) ou par des sangles formant des boucles passant sous chaque pièce de carrosserie (13).

8. Ensemble selon l'une des revendications précédentes, comprenant au moins un séparateur (129 ; 229) apte à se placer entre deux pièces de carrosserie (13) portées par deux chariots (7 ; 117 ; 217) voisins, pour éviter qu'elles s'abîment si elles se rapprochent l'une de l'autre.

9. Ensemble selon les revendications 7 et 8, dans lequel le séparateur est constitué par des sur-épaisseurs formées sur les sangles de suspension, qui viennent s'appuyer les unes contre les autres en formant une entretoise entre deux pièces de carrosserie.

10. Ensemble selon la revendication 8, dans lequel le séparateur est constitué par un rideau en matériau souple et amortissant, comme une toile épaisse, suspendu à un chariot devant ou derrière la pièce de carrosserie qu'il supporte.

11. Ensemble selon la revendication 8, dans lequel le séparateur est constitué par une housse (129 ; 229), remplissant à la fois le rôle de moyen de suspension et de séparateur.

12. Ensemble selon l'une des revendications précédentes, dans lequel les rails (101, 103 ; 201, 203 ; 301, 303) comportent chacun une face supérieure lisse (109, 111 ; 209, 211 ; 309, 311) et les appuis adaptés aux rails comportent chacun au moins un patin (125, 127) ou une roue (225, 227) capable de se déplacer sur la face supérieure lisse d'un rail et dans lequel le guidage des appuis (125, 127 ; 225, 227) le long des rails 101, 103 ; 201, 203 ; 301, 303) est assuré par des lèvres (105, 107 ; 205, 207 ; 305 , 307) disposées en bordure de la face supérieure lisse (109, 111 ; 209, 211 ; 309, 311) de chaque rail, chaque lèvre faisant saillie en direction de l'appui et formant une butée qui empêche ledit appui de quitter le rail pendant son déplacement longitudinal, au moins dans une direction perpendiculaire au rail.

13. Ensemble selon la revendication précédente, dans lequel les lèvres (305, 307) forment des butées verticales, de préférence rigides, qui retiennent les appuis (225, 227) sur le rail (301, 303).

14. Ensemble selon la revendication 12, dans lequel les lèvres (105, 107 ; 205, 207) forment des butées inclinées, qui autorisent chaque appui (125, 127 ; 225, 227) à déborder du rail en montant légèrement sur une butée dans l'hypothèse où le chariot (117 ; 217) se décalerait ou se désaxerait par rapport aux rails (101, 103 ; 201, 203).

## Patentansprüche

1. Anordnung aus Karosserieteilen (13) für Kraftfahrzeuge und aus einer statischen Vorrichtung (1) zur provisorischen Lagerung der Karosserieteile (13), wobei die Anordnung folgendes umfasst:
- einen feststehenden Rahmen (3),
- mindestens zwei parallele feststehende Schienen (101, 103; 201, 203; 301, 303), die horizontal oder leicht geneigt an dem Rahmen (3) angeordnet sind, wobei jede Schiene dazu eingerichtet ist, eine Auflage (125, 127; 225, 227) zu haltern, die in der Form an die Schiene angepasst ist, dass sie auf dieser Schiene in Längsrichtung beweglich ist,
- mindestens einen Schlitten (7; 117; 217), der mit Auflagen (125, 127; 225, 227) versehen ist, die an die Schiene angepasst sind, und der dimensioniert ist, um über diese Auflagen auf den zwei Schienen aufzuliegen,
- Mittel (129; 229), um an dem Schlitten ein Karosserieteil (13) aufzuhängen,
wobei sich jeder Schlitten (7; 117; 217), in Längsrichtung relativ zu den Schienen, über eine Länge (L) erstreckt, die kleiner ist als der Längsplatzbedarf eines Karosserieteils, in seiner aufgehängten Position, wobei die Anordnung **dadurch gekennzeichnet ist, dass** die Aufhängemittel (129; 229) so ausgebildet sind, dass der Platzbedarf von zwei aneinander gehängten Karosserieteilen (13) kleiner als der zweifache Platzbedarf eines Karosserieteils ist.

2. Anordnung nach Anspruch 1, wobei sich jeder Schlitten (7; 117; 217), in Längsrichtung relativ zu den Schienen, über eine Länge (L) erstreckt, die kleiner ist als der Einsteckabstand (P) der Karosserieteile (13), in ihrer aufgehängten Position, wenn die Karosserieteile jeweils paarweise in ihrer aufgehängten Position ineinander gesteckt werden können.

3. Anordnung nach einem der vorhergehenden Ansprüche mit Schutzhüllen (129; 229), die jede ein Karosserieteil (13) enthalten.

4. Anordnung nach dem vorhergehenden Anspruch, wobei mindestens eine Hülle (129; 229) das Karosserieteil auf nur einer seiner Flächen bedeckt.

5. Anordnung nach einem der Ansprüche 3 und 4, wobei mindestens eine Hülle (129; 229) einen elastischen Rand aufweist.

6. Anordnung nach einem der Ansprüche 3 bis 5, wobei mindestens eine Hülle (129; 229) in ihrem unteren Teil Verbindungselemente zum Befestigen einer weiteren identischen Hülle umfasst.

7. Anordnung nach einem der vorhergehenden Ansprüche, wobei die Aufhängemittel von Hüllen (129; 229) oder von Schleifen bildenden Gurten gebildet sind, die unter jedem Karosserieteil (13) durchlaufen.

8. Anordnung nach einem der vorhergehenden Ansprüche, umfassend mindestens ein Trennelement (129; 229), das zwischen zwei Karosserieteilen (13), die von zwei benachbarten Schlitten (7; 117; 217) getragen werden, plazierbar ist, um zu vermeiden, dass sie beschädigt werden, wenn sie sich einander annähern.

9. Vorrichtung nach Anspruch 7 und 8, wobei das Trennelement von Überdicken gebildet ist, die an den Aufhängegurten gebildet sind und die gegeneinander zur Abstützung kommen, indem sie ein Abstandsstück zwischen zwei Karosserieteilen bilden.

10. Anordnung nach Anspruch 8, wobei das Trennelement von einem Vorhang aus flexiblem und dämpfendem Material, wie ein dicker Stoff, gebildet ist, der an einem Schlitten vor oder hinter dem Karosserieteil, das er haltert, aufgehängt ist.

11. Anordnung nach Anspruch 8, wobei das Trennelement von einer Hülle (129; 229) gebildet ist, die als Aufhängemittel und als Trennelement gleichzeitig dient.

12. Anordnung nach einem der vorhergehenden Ansprüche, wobei die Schienen (101, 103; 201, 203; 301, 303) jede eine obere glatte Fläche (109, 111; 209, 211; 309, 311) aufweisen und die Auflagen, die an die Schienen angepasst sind, jede mindestens einen Gleitschuh (125, 127) oder ein Rad (225, 227) aufweisen, der bzw. das sich auf der oberen glatten Fläche einer Schiene bewegen kann, und wobei die Führung der Auflagen (125, 127; 225, 227) entlang der Schienen (101, 103; 201, 203; 301, 303) durch Lippen (105, 107; 205, 207; 305, 307) sichergestellt wird, die am Rand der oberen glatten Fläche (109, 111; 209, 211; 309, 311) jeder Schiene angeordnet sind, wobei jede Schiene in Richtung der Auflage vorspringt und einen Anschlag bildet, der verhindert, dass die Auflage die Schiene während ihrer Längsbewegung verlässt, zumindest in einer Richtung senkrecht zu der Schiene.

13. Anordnung nach dem vorhergehenden Anspruch, wobei die Lippen (305, 307) vertikale, vorzugsweise steife, Anschläge bilden, welche die Auflagen (225, 227) auf der Schiene (301, 303) zurückhalten.

14. Anordnung nach Anspruch 12, wobei die Lippen (105, 107; 205, 207) geneigte Anschläge bilden, die jeder Auflage (125, 127; 225, 227) gestatten, über die Schiene überzustehen, indem sie sich, unter der Annahme, dass der Schlitten (117; 217) sich relativ zu den Schienen (101, 103; 201, 203) verlagern oder axial verschieben sollte, geringfügig auf einen Anschlag hinauf bewegen.

## Claims

1. Assembly of motor vehicle body parts (13) and a static temporary storage device (1) for said motor vehicle body parts (13), the assembly comprising:
• a stationary frame (3) ;
• at least two stationary parallel rails (101, 103; 201, 203; 301, 303) that are mounted horizontally or in a slightly angled manner sloping on the frame (3), each rail being capable of supporting a bearing (125, 127; 225, 227) fitted onto the rail so as to be longitudinally movable on the rail;
• at least one carriage (7; 117, 217) having bearing (125, 127; 225, 227) fitted onto the rail, the carriage being dimensioned so as to rest on both rails by means of said support; and
• means (129; 229) for suspending a bodywork part (13) from the carriage;
each carriage (7; 117; 217) extending longitudinally relative to the rails over a length (L) that is shorter than the longitudinal extent of a bodywork part, in a suspended position thereof, the assembly being **characterized in that** the suspension means (129; 229) are shaped in such a manner that the extent of two body parts (13) beside each other is less than twice the extent of a single body part.

2. Assembly according to claim 1, wherein each carriage (7; 117; 217) extends longitudinally relative to the rails, over a length (L) that is shorter than the nesting pitch (P) of the body parts (13) in their suspended position, assuming said body parts are capable of being nested in pairs when in their suspended position.

3. Assembly according to any preceding claim, including protective covers (129; 229), each containing a bodywork part (13).

4. Assembly according to the preceding claim, wherein at least one cover (129; 229) covers the body part on a single one of its faces.

5. Assembly according to claim 3 or 4, wherein at least one cover (129; 229) includes an elastic border.

6. Assembly according to any one of claims 3 to 5, wherein at least one cover (129; 229) includes at its bottom portion fasteners enabling another, identical cover to be fastened thereto.

7. Assembly according to any preceding claim, wherein the suspension means, and possibly the cover, are constituted by the covers (129; 229) or by straps forming loops passing under each body part (13).

8. Assembly according to any preceding claim, including at least one separator (129; 229) suitable for being placed between two body parts (13) carried by two adjacent carriages (7; 117; 217) in order to prevent said body parts from being damaged if they approach each other.

9. Assembly according to claims 7 and 8, wherein the separator is constituted by extra thicknesses formed by the suspension straps that bear against one another so as to form a spacer between two body parts.

10. Assembly according to claim 8, wherein the separator is constituted by a curtain of flexible and damping material, such as a thick fabric, suspended from a carriage in front of or behind the body part that it supports.

11. Assembly according to claim 8, wherein the separator is constituted by a cover (129; 229) acting both as suspension means and as a separator.

12. Assembly according to any preceding claim, wherein each rail (101, 103; 201, 203; 301, 303) has a smooth top face (109, 111; 209, 211; 309, 311) and each bearing fitted onto the rails includes at least one skid (125, 127) or at least one wheel (225, 227) capable of moving on the smooth top face of a rail, and wherein the bearings (125, 127; 225, 227) are guided along the rails (101, 103; 201, 203; 301, 303) by lips (105, 107, 205, 207; 305, 307) arranged at the margin of the smooth top face (109, 111; 209, 211; 309, 311) of each rail, each lip projecting towards the bearing and forming an abutment that prevents said bearing from leaving the rail while it is moving longitudinally, at least from leaving the rail in a direction perpendicular thereto.

13. Assembly according to the preceding claim, wherein the lips (305, 307) form vertical abutments, preferably rigid, that retain the supports (225, 227) on the rail (301, 303).

14. Assembly according to claim 12, wherein the lips (105, 107; 205, 207) form sloping abutments that allow each bearing (125, 127; 225, 227) to overhang from the rail by rising a little up the abutment, assuming that the carriage (117; 217) shifts or turns relative to the rails (101, 103; 201, 203).
